(19) Europäisches Patentamt
European Patent Office
Office européen des brevets

(11) **EP 1 787 521 A1**

(12) **EUROPEAN PATENT APPLICATION**
published in accordance with Art. 158(3) EPC

(43) Date of publication:
**23.05.2007 Bulletin 2007/21**

(51) Int Cl.:
**A23D 9/00** (2006.01)

(21) Application number: **05770444.7**

(22) Date of filing: **09.08.2005**

(86) International application number:
**PCT/JP2005/014569**

(87) International publication number:
**WO 2006/016576 (16.02.2006 Gazette 2006/07)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.08.2004 JP 2004233988**

(71) Applicant: **Fuji Oil Company, Ltd.
Osaka-shi,
Osaka 542-0086 (JP)**

(72) Inventors:
• **Asama, Koji,
c/o Fuji Oil Company Limited
Tsukuba-gun,
Ibaraki 3002436 (JP)**

• **Fujinaka, Masayo,
c/o Fuji Oil Company Limited
Izumisano-shi,
Osaka 5988540 (JP)**
• **Kida, Haruyasu,
c/o Fuji Oil Company Limited
Izumisano-shi,
Osaka5 988540 (JP)**

(74) Representative: **Hayes, Adrian Chetwynd
Boult Wade Tennant,
Verulam Gardens
70 Gray's Inn Road
London WC1X 8BT (GB)**

(54) **FAT-AND-OIL COMPOSITIONS FOR INHIBITING THE MIGRATION OF WATER IN FOOD AND FOODS MADE BY USING THE SAME**

(57)     The present invention aims at providing fat-and-oil compositions which can effectively inhibit the migration of water even when a low-water-content component is in contact with a high-water-content component and foods made by using the same. Namely, a fat-and-oil composition for inhibiting the migration of water in food wherein the fat-and-oil component contains a 1,2-saturated-3-unsaturated glyceride (SSU) in an amount of 15wt% or above but preferably below 50 wt% and a 1,3-saturated-2-unsaturated glyceride (SUS) in an amount of less than 50 wt%; fat-and-oil compositions as described above which further contain at least one member selected from among mono-diglycerides, sorbitan tristearate, and acetylated sucrose fatty acid esters, or a solid matter other than fats and oils; and foods containing, between low-water-content regions and high-water-content regions, the fat-and-oil compositions for inhibiting the migration of water.

**Description**

Technical Field

The present invention relates to a fat-and-oil composition for inhibiting the migration of water in a food product and a food product using the same.

Background Art

As for a food product made by combining a food product with a low water content such as a baked confectionery and a food product with a high water content such as custard cream and fruit filling, there are a variety of products based on their contrast between the mouthfeel and the taste in fields of western and Japanese confectionery, and they constitute a class of luxury food products. However, since water migrates among different materials with the lapse of time after production, the mouthfeel, for example, the crispy and crunchy feel of a low-water-content material is lost, which causes a problem of deterioration of a product value.

In such a composite food product made by combining a plurality of food materials with different water contents, a fat-and-oil based material has been proposed as a coating material which inhibits the migration of water among materials.

For example, U.S. Patent No. 5,130,150 and EP 1080643 A disclose the addition of edible wax to fats and oils to obtain the inhibitory effect of the migration of water. However, many waxes have a high melting point and it is required to heat a fat-and-oil composition to a high temperature at the time of working and there may be a possibly of an adverse influence on the taste and physical quality of fats and oils themselves. Further, in general, many waxes are costly and there is a limit to obtain a sufficient effect in terms of cost.

U.S. Patent No. 5,518,744 defines the viscosity of fats and oils in relation to a temperature. However, since the fats and oils have fluidity even in a refrigeration temperature range, a continuous layer of the fats and oils may be broken due to turning over, vibration, etc. in case of assuming long term distribution steps and it is difficult to maintain sufficient inhibition of the water migration.

Japanese Patent No. 3022259 and JP 10-179027 A exhibit the inhibitory effect of the water migration in a freezing region. Therefore, a sufficient effect can be hardly expected in a refrigeration temperature range or a normal temperature range higher than a freezing temperature.

JP 2004-97148 A discloses a continuous phase. However, it is an aqueous phase and a sufficient effect for inhibiting the water migration for a long time is hardly expected.

JP 6-14717 A and JP 5-211837 A disclose the use of non-tempering, non-trans-fatty acid, non-lauric acid type fats and oils for the production of confectionery. However, they are silent on the effect for inhibiting the water migration.

Disclosure of the invention

Problems to Be Solved by the Invention

Objects of the present invention are to provide a fat-and-oil composition which can effectively inhibit the migration of water even when a low-water content component is in contact with a high-water-content component, and a food product using the composition.

Means for Solving the Problems

As a result of an intensive study for achieving the above objects, the present inventors have found that asymmetric triglyceride-containing fats and oils specifically have the inhibitory function of the migration of water. Thus, the present invention has been completed.

That is, the present invention is a fat-and-oil composition for inhibiting the migration of water in food, whose fats and oils comprise 15% by weight or more but preferably below 50% by weight of 1,2-saturated-3-unsaturated glycerides (SSU) and less than 50% by weight of 1,3-saturated-2-unsaturated glycerides (SUS); the fat-and-oil composition further comprising at least one ingredient selected from mono-diglycerides, sorbitan tristearate, and acetylated sucrose fatty acid esters; the fat-and-oil composition further comprising solid matter other than fats and oils; and a food product comprising the fat-and-oil composition for inhibiting the migration of water in food present between a low-water-content region and a high-water content region.

Effects of the Invention

In the fat-and-oil composition for inhibiting the migration of water in food of the present invention, the fats and oils containing SSU and SUS in a range of the specific ratio are used, thereby inhibiting the increase in water content of a low-water-content region of a food product having both low-water-content and high-water content regions at a refrigeration or normal temperature range and thus making it possible to keep the original good crispy and crunchy mouthfeel of the food product.

Best Mode for Carrying Out the Invention

First, the fat-and-oil composition of the present invention and its production process will be described.

The fat-and-oil composition of the present invention contains 1,2-saturated-3-unsaturated glycerides (SSU) (hereinafter referred to as SSU type triglycerides) in an amount of 15% by weight or more and 1,3-ssaturated-2-unsaturated glycerides (SUS) (hereinafter referred to as SUS type triglycerides) in an amount of less than 50% by weight in the fats and oils.

Examples of the SSU type triglycerides include PPO (1,2-dipalmitoyl-3-oleoylglycerin), PStO (1-palmitoyl-2-stearoyl-3-oleoylglycerin), StStO (1,2-distearoyl-3-oleoylglycerin), etc.

Examples of the SUS type triglycerides include POP (1,3-dipalmitoyl-2-oleoylglycerin), POSt (1-palmitoyl-2-oleoyl-3-stearoylglycerin), StOSt (1,3-distearoyl-2-oleoylglycerin), etc.

The fats and oils are required to contain 15% by weight or more of the SSU type triglycerides. If the content of the SSU type triglycerides is lower than 15% by weight, a good inhibitory function of the migration of water cannot be imparted because a uniform and dense layer of the fat-and-oil composition cannot be formed. Further, the content of the SUS type triglycerides is lower than 50% by weight. If the content of the SUS type triglycerides is 50% by weight or higher, significant polymorphic crystallization occurs, which makes it difficult to maintain the fat-and-oil composition in a stable layer state and to impart the good inhibitory function of the migration of water.

Further, the good inhibitory function of the migration of water can be imparted by addition of at least one ingredient selected from mono-diglycerides, sorbitan tristearate and acetylated sucrose fatty acid esters to the above-mentioned fat-and-oil composition. In this case, preferably, such an ingredient is added in an amount of 15% by weight or less to the fat-and-oil composition. If the amount exceeds 15% by weight, the ingredient significantly influences the taste at the time of eating and the cost may become high. Therefore, it is not preferable. The mono-diglycerides contain about 40% by weight of diglycerides. Further, preferably, the amount of the ingredient selected from mono-diglycerides, sorbitan tristearate, and acetylated sucrose fatty acid esters is 0.05% by weight or higher in the fat-and-oil composition. If the amount is lower than 0.05% by weight, the inhibitory function of the migration of water is hardly exhibited.

Next, the production process of the fat-and-oil composition will be described.

Raw materials of the fats and oils to be used for the fat-and-oil composition of the present invention are not specifically limited. Examples thereof include those derived from interesterification oils obtained by an interesterification reaction between raw materials such as a combination of fats and oils mainly composed of saturated fatty acids and fats and oils mainly composed of oleic acid; fats and oils containing saturated fatty acids and oleic acids, alone or a combination of such fats and oils; or a combination of fats and oils mainly composed of saturated fatty acids and oleic acid or an oleic acid ester using an enzyme (lipase) or a metal catalyst, or fractionated oils thereof. When an interesterification reaction is carried out using an enzyme, it is required to use a solvent and/or raise the reaction temperature because the raw material fats and oils have a high melting point. Then, in view of the cost and the production steps, it is advantageous to use a metal catalyst such as sodium methoxide, etc., for carrying out the interesterification reaction. Further, if necessary, high melting point-and/or low melting point-portions may be removed by fractionation using an organic solvent such as hexane, acetone, etc., to obtain the fats and oils to be used for the present invention.

The fats and oils constituting the fat-and-oil composition may be any fats and oils as far as they meets the above-mentioned requirements. Examples thereof include vegetable fats and oils such as rapeseed oil, soybean oil, sunflower seed oil, cotton seed oil, peanut oil, rice bran oil, corn oil, safflower oil, olive oil, Kapok oil, sesame oil, evening primrose oil, palm kernel oil, coconut oil, shea butter, sal butter, cocoa butter, etc., and animal fats and oils such as milk fats, beef tallow, lard, fish oil, etc.

The above-mentioned fat-and-oil composition can work as a barrier having an inhibitory function of the migration of water between low-water-content and high-water content regions in a food product. The fat-and-oil composition can be fats and oils themselves, or can be used as a composition containing another solid matter such as coating chocolate, etc., and it is possible to provide any optional taste or color to the composition.

Another aspect of the present invention is a food product comprising the fat-and-oil composition present between a low-water-content region and a high-water content region.

A method for using the above-mentioned fat-and-oil composition can be carried out easily by conventional means, for example, applying (coating), spraying, immersing, or overlaying (enrobing) the composition to or on a low-water content region or a high-water content region which is a raw material of the food product.

The high-water-content region and the low-water content region referred to in the present invention is determined in accordance with a relative water content of foods used in a composite food product and, in general, examples of foods with low-water content are cone cups of soft cream, wafers, nuts such as almond nuts and peanut, cereal flakes and cereal puff such as corn flakes, baked confectionery such as cookies and pretzels, coatings of flied foods, pies, breads, crumbs, etc. Examples of foods with high-water content are vegetable, fruit, Ganache, soft cream, custard cream, jam, fillings, mayonnaise, dressings, sauces, so-called ingredients for flied food (ingredients to be flied), etc.

A method for presenting the above-mentioned fat-and-oil composition between a low-water-content region and a high-water content region is generally carried out by mixing or contacting one region previously coated with the fat-and-oil composition with the other region. It is also possible to employ a method of extruding an inner material (region), the fat-and-oil composition, and an outer material (region) in three layers by using an encrusting apparatus.

The food product of the present invention thus obtained, wherein the fat-and-oil component is presented between a low-water-content region and a high-water content region in the above-mentioned manner as a whole is of good value because the migration of water between the regions is inhibited even when it is stored at a refrigeration temperature or a normal temperature region.

Hereinafter, the present invention will be explained more specifically with reference to Examples and Comparative Examples. However, the scope of the present invention is not limited by these Examples. In Examples and Comparative Examples, all parts and percents are by weight.

Example 1

Preparation of fats and oils

Interesterification reaction oil was obtained by interesterification of extremely hydrogenated soybean oil (iodine value: 0.5) and high oleic acid-containing sunflower oil (iodine value: 85.0) at a ratio of 1 : 1 using sodium methoxide as a catalyst and fractions with higher melting point and lower melting point than that of the interesterification reaction oil was removed from the interesterification reaction oil by solvent fractionation to obtain a middle melting point fraction (yield: 36%). The composition of the fraction was 46.7% of SSU and 26.7% of SUS (S represents saturated fatty acid residues and U represents unsaturated fatty acid residues) and the iodine value was 34.5.

Measurement method

(1) Triglyceride composition: high performance liquid chromatography (column: ODS, eluent: acetone/acetonitrile = 80/20, elution rate: 0.9 ml/minute, column temperature: 25°C, detector: differential refraction type) was employed for measurement.
(2) Symmetric type, asymmetric type triglyceride composition: thin layer chromatography (plate: a silver nitrate thin layer plate, development solvent: hexane/toluene/diethyl ether = 42/50/8, detector: a densitometer).

Evaluation method

The completely melted fraction of Example 1 in an amount of 0.7 g was dropped on TOYO No. 2 filtration paper cut in a circular shape of 63 mm diameter and kept in an incubator at 60°C for 30 minutes to entirely impregnate the filtration paper with the fats and oils to form a fat-and-oil film. Then, after the fats and oils were solidified by keeping the filtration paper at 20°C for 1 hour, the filtration paper was air-tightly fixed as a cover on the top face of a container made of a plastic resin of 60 mm inner diameter and containing 50 g of an aqueous 40% ammoniums sulfate solution.

The container was placed in a desiccator and further the desiccator was stored in an incubator at 25°C to measure the amount of steam passing through the above-mentioned fat-and-oil film in terms of on the weight loss of the aqueous ammonium sulfate solution.

```
water loss ratio = (weight before storage - weight after

storage) ÷ (weight before storage) × 100
```

When the water loss ratio was measured after 2 days, it was 0.09%. Further, when the water loss ratio was measured after 7 days, it was 0.30%.

Example 2

In Example 2, the water loss ratio was measured after 2 days according to the same manner as that of Example 1 except that a mixed oil containing 80% by weight of the middle melting point fraction used in Example 1 and 20% by weight of palm super-olein (iodine value: 68.0) was used. As a result, the loss was 0.10%. Further, when the water loss ratio was measured after 7 days, it was 0.36%. The composition of the mixed oil was SSU = 38.4% and SUS = 25.0%.

Comparative Example 1

In Comparative Example 1, the water loss ratio was measured after 2 days according to the same manner as that of Example 1 except that no fats and oils were applied to the filtration paper. As a result, the loss was 12.23%. Further, when the water loss ratio was measured after 7 days, it was 30.6%.

Comparative Example 2

In Comparative Example 2, a tempering type hard butter (manufactured by Fuji Oil Company, Limited, trade name: Melano NEW SS7) was used in place of the fraction of Example 1 and mixed with 0.5% of a seed agent (manufactured by Fuji Oil Company, Limited, trade name: Chocoseed A) at 32°C after being completely melted and subjected to tempering treatment. Then, 0.7 g of the resulting butter was dropped on filter paper and kept in an incubator at 32°C for 30 minutes to entirely impregnate the filtration paper with the butter to form a butter film. Then, after the butter was solidified by keeping the filtration paper at 20°C for 1 hour, the filtration paper was air-tightly fixed as a cover on the top of a container made of a plastic resin and having 60 mm inner diameter, and containing 50 g of an aqueous 40% ammoniums sulfate solution. Thereafter, the same operation as that of Example 1 was repeated. When the water loss ratio was measured after 2 days, it was 0.20%. Further, when the water loss ratio was measured after 7 days, it was 0.75%. The composition of the butter was SSU = 3.8% and SUS = 85.3%.

Comparative Example 3

In Comparative Example 3, the water loss ratio was measured after 2 days according to the same manner as that of Example 1 except that the fraction of Example 1 was replaced with soybean oil (manufactured by Fuji Oil Company, Limited, trade name: Essential Soybean Oil). As a result, the loss was 0.93%. Further, when the water loss ratio was measured after 7 days, it was 3.23%.

Comparative Example 4

In Comparative Example 4, the water loss ratio was measured after 2 days according to the same manner as that of Example 1 except that the fraction of Example 1 was replaced with symmetric interesterification fats and oils (manufactured by Fuji Oil Company, Limited, trade name: Amopha 10, SUS = 58.6%, SSU = 0.9%, iodine value 70.0). As a result, the loss was 1.63%. Further, when the water loss ratio was measured after 7 days, it was 4.21%.

Example 3

In Example 3, the water loss ratio was measured after 2 days according to the same manner as that of Example 1 except that a fat-and-oil composition produced by adding 2% of palmitic acid mono-diglycerides (manufactured by Riken Vitamin Co., Ltd., trade name: Poem P-200) to the fraction used in Example 1 and completely melting the mixture was used. As a result, the loss was 0.08%. Further, when the water loss ratio was measured after 7 days, it was 0.24%.

Example 4

In Example 4, the water loss ratio was measured after 2 days according to the same manner as that of Example 1 except that a fat-and-oil composition produced by adding 2% of acetylated sucrose fatty acid ester (manufactured by Dai-Ichi Kogyo Seiyaku Co., Ltd., trade name: DK Ester FA10E) to the fraction used in Example 1 and completely melting the mixture was used. As a result, the loss was 0.09%. Further, when the water loss ratio was measured after 7 days, it was 0.26%.

Example 5

In Example 5, the water loss ratio was measured after 2 days according to the same manner as that of Example 1 except that a fat-and-oil composition produced by adding 2% of sorbitan tristearic acid ester (manufactured by Riken Vitamin Co., Ltd., trade name: Poem S65V) to the fraction used in Example 1 and completely melting the mixture was used. As a result, the loss was 0.10%. Further, when the water loss ratio was measured after 7 days, it was 0.26%.

Example 6

Since the evaluation work was complicated, the resulting effect tended to be easily fluctuated, and it took a long period of time until the results were obtained, the following method using a model system was employed.

In Example 6, after the fraction of Example 1 was completely melted at 60°C, it was applied to peanuts and solidified at 20°C for 1 day, followed by keeping in an incubator at 25°C and 90% relative humidity to measure the fluctuation of water content with time. In this case, 1.2 g of the fraction was applied to 20 pieces of half-divided peanuts. The water content before application of the fraction was 1.9% and the water content after 4 day-storage was 6.7%.

Comparative Example 5

In Comparative Example 5, the same operation as that of Example 6 was repeated except that no fats and oils were applied. The water content before application of the fats and oils was 1.9% and the water content after 4 day-storage was 12.4%.

Comparative Example 6

In Comparative Example 6, the same operation as that of Example 6 was repeated except that the hydrogenated oil used in Comparative Example 2 (manufactured by Fuji Oil Company, Limited, trade name: Melano H 1000) was used in place of the fraction of Example 1 for application to peanuts. The water content before application of the oil was 1.9% and the water content after 4 day-storage was 9.2%.

Comparative Example 7

In Comparative Example 7, the same operation as that of Example 6 was repeated except that the hydrogenated oil used in Comparative Example 5 (manufactured by Fuji Oil Company, Limited., trade name: Melano F 1100) was used in place of the fraction of Example 1 for application to peanuts. The water content before application of the oil was 1.9% and the water content after 4 day-storage was 9.1%.

**Claims**

1. A fat-and-oil composition for inhibiting the migration of water in food, whose fats and oils comprise 15% by weight or more of 1,2-saturated-3-unsaturated glycerides (SSU) and less than 50% by weight of 1,3-saturated-2-unsaturated glycerides (SUS).

2. A fat-and-oil composition for inhibiting the migration of water in food whose fat-and-oil component comprises 15% by weight to less than 50% by weight of 1,2-saturated-3-unsaturated glycerides (SSU) and less than 50% by weight of 1,3-saturated-2-unsaturated glycerides (SUS).

3. The fat-and-oil composition according to claim 1 further comprising at least one ingredient selected from mono-diglycerides, sorbitan tristearate, and acetylated sucrose fatty acid esters.

4. The fat-and-oil composition according to claim 1 further comprising solid matter other than fats and oils.

5. A food product comprising the fat-and-oil composition according to claim 1 present between a low-water-content region and a high-water content region.

| | | |
|---|---|---|
| **INTERNATIONAL SEARCH REPORT** | International application No. | |
| | PCT/JP2005/014569 | |

**A. CLASSIFICATION OF SUBJECT MATTER**
Int.Cl$^7$ A23D9/00

According to International Patent Classification (IPC) or to both national classification and IPC

**B. FIELDS SEARCHED**

Minimum documentation searched (classification system followed by classification symbols)
Int.Cl$^7$ A23D9/00

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)
WPI(DIALOG), JSTPlus(JOIS)

**C. DOCUMENTS CONSIDERED TO BE RELEVANT**

| Category* | Citation of document, with indication, where appropriate, of the relevant passages | Relevant to claim No. |
|---|---|---|
| X/Y | JP 9-316484 A  (Fuji Oil Co., Ltd.),<br>09 December, 1997 (09.12.97),<br>Full text<br>(Family: none) | 1-2/3-5 |
| X/Y | JP 9-285255 A  (Fuji Oil Co., Ltd.),<br>04 November, 1997 (04.11.97),<br>Full text<br>& EP 803196 A1          & US 5879736 A | 1-2/3-5 |
| Y | JP 2000-41579 A  (Fuji Oil Co., Ltd.),<br>15 February, 2000 (15.02.00),<br>Full text<br>(Family: none) | 3-5 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 September, 2005 (01.09.05) | 20 September, 2005 (20.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/014569

C (Continuation). DOCUMENTS CONSIDERED TO BE RELEVANT

| Category* | Citation of document, with indication, where appropriate, of the relevant passages | Relevant to claim No. |
|---|---|---|
| Y | JP 63-112948 A (Fuji Oil Co., Ltd.), 18 May, 1988 (18.05.88), Full text (Family: none) | 3-5 |
| Y | JP 2002-503490 A (MARS, INC.), 05 February, 2002 (05.02.02), Full text & WO 99/41993 A1 & US 6110515 A & EP 1056352 A1 | 5 |
| A | JP 9-9940 A (Fuji Oil Co., Ltd.), 14 January, 1997 (14.01.97), Full text & EP 750844 A2 & US 5766659 A | 1-5 |
| A | JP 10-179027 A (Fuji Oil Co., Ltd.), 07 July, 1998 (07.07.98), Full text (Family: none) | 1-5 |

Form PCT/ISA/210 (continuation of second sheet) (January 2004)

**EP 1 787 521 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5130150 A
- EP 1080643 A
- US 5518744 A
- JP 3022259 B
- JP 10179027 A
- JP 2004097148 A
- JP 6014717 A
- JP 5211837 A